Europäisches Patentamt

European Patent Office

Office européen des brevets

(11) Publication number: **0 113 308**
**A1**

(12) # EUROPEAN PATENT APPLICATION

(21) Application number: **83630193.7**

(22) Date of filing: **01.12.83**

(51) Int. Cl.³: **F 16 B 37/04**

(30) Priority: **06.12.82 US 446373**

(43) Date of publication of application:
**11.07.84 Bulletin 84/28**

(84) Designated Contracting States:
**BE CH DE FR GB IT LI NL**

(71) Applicant: **REXNORD INC.**
**P.O. Box 2022**
**Milwaukee, Wisconsin 53201(US)**

(72) Inventor: **Schultz, Charles F.**
**342 Ramona Pl.**
**Costa Mesa, CA 92627(US)**

(74) Representative: **Weydert, Robert et al,**
**Office Dennemeyer S.à.r.l. 21-25 Allée Scheffer P.O. Box**
**41**
**L-2010 Luxembourg(LU)**

(54) **Floating press nut.**

(57) The floating press nut is arranged within a retainer ring (10) having an aperture (13) within which the press nut (11) is accommodated and with a metal lip (12) that is bent inward to hold the nut (11) in place and prevent axial and lateral movement.

The circumference of the retainer ring (10) is serrated. This moves metal, when installed, into an annular groove (16) formed by the circumference and a pilot flange (17) on the bottom of said retainer ring (10).

A metal ring (20) is formed holding the retainer ring (10) in place and preventing rotational movement.

When installed in a workpiece (18) a screw (19) may be inserted without the use of a wrench or tool on the nut.

FIG. 4

EP 0 113 308 A1

Croydon Printing Company Ltd.

FLOATING PRESS NUT

This invention belongs to the field of floating nut retention systems, particularly with respect to nuts that are free floating, subject to ambient environment, yet lock against rotational movement.

Earlier inventions in this field were either the sealed floating nut like U.S. patent 3 508 592 , the high torque floating nut, U.S. patent 4 193 435 or numerous low torque systems like U.S. Patent 2 087 113; 1 761 358; 2 307 405; 3 461 927; 2 304 107; or 2 078 411. The present invention avoids all the shortcomings of the prior art by providing a floating press nut which seats itself in the retainer ring and is locked in place needing no wrench or other tool to tighten the screw into it.

A floating nut retention system including a nut having a central aperture therein. A retaining or locking mechanism, for forming a metallic circular seal with the workpiece. The invention has a circular retaining member on the top which is permanently assembled to the nut and has a space to receive the nut therein. This is done by having the nut fall in place in a square aperture in the retaining ring before the top of the retainer is depressed over the nut. Thus the nut floats in relation to the securing or locking mechanism but is fixed in the aperture of the retaining ring.

The present invention provides a nut, a retainer ring containing an aperture for the nut which is permanently assembled to the retaining ring to produce a single unitized floating nut retaining system which has as its object the accommodating of misaligned holes.

It is another object of the present invention to provide a floating system for the nut.

A further object of this invention is to provide a nut which cannot be moved from the workpiece by the insertion of a screw and needs no tool to tighten a part onto the workpiece.

It is another object of this invention to provide an aperture like a square for the nut instead of the ears or lugs used by prior inventions.

The advantage of this invention, both as to its construction and mode of operation will be readily appreciated as the same becomes better understood by reference to the following detailed description when considered in connection with the accompanying drawings.

A more thorough understanding of the present invention will be gained by reading the following description of the preferred embodiments with reference to the accompanying drawings in which:

Figure 1 is a top view of the nut in the retainer ring.

Figure 2 is a partially cross-section of the retainer ring of this invention without the nut in place.

Figure 3 is a top view of this invention before being installed in a workpiece.

Figure 4 is a cross-sectional view of the invention with a screw attached, installed in a workpiece.

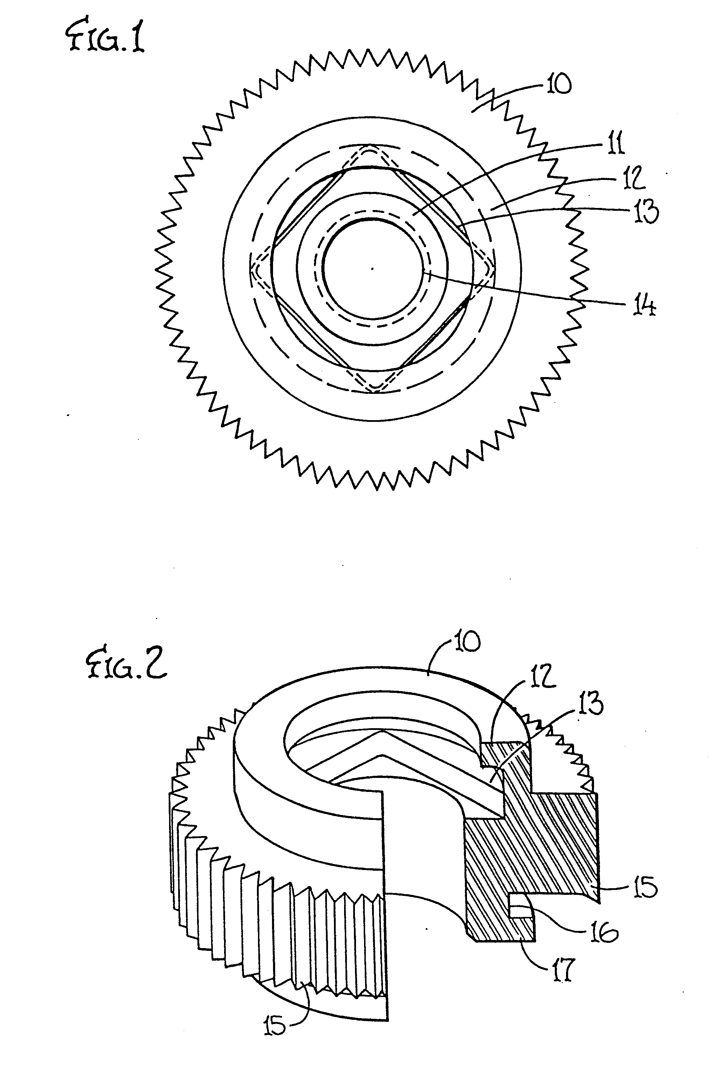

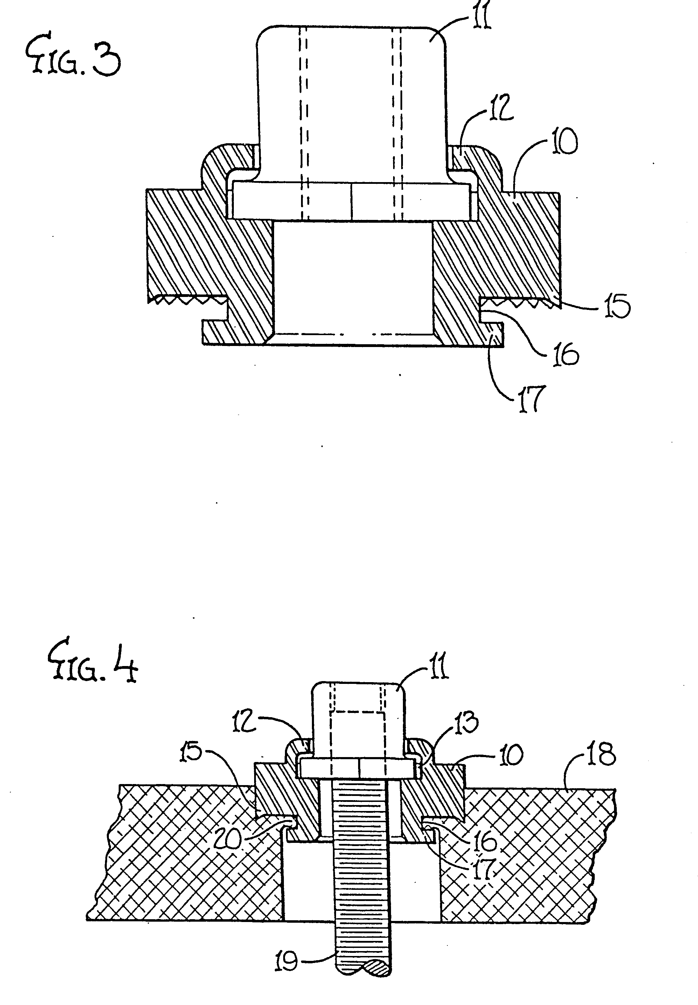

In Figure 1 can be seen the preferred embodiment of this invention. A retaining ring 10 has a nut 11 trapped within a metal retainer lip 12 turned inward to trap the nut 11. This prevents axial and lateral movement of nut 11. An aperture 13 to accommodate the nut is machined out of the retaining ring 10 and the square nut is assembled into the square aperture which prevents rotational movement when the nut is held in place by the action of forming the retainer lip 12. The nut 11 loosely fits in the aperture 13 and retaining ring 10 and thus the name floating press nut. Looking next at Figure 2 one can see the entire structure of the retaining ring 10 without the nut.

Figure 3 shows a nut 11 assembled into the retaining ring 10 held in the square aperture by the formed retainer lip 12. The serrations 15, pilot flange 17 and the annular groove 16 complete the assembly.

In Figure 4 the floating nut 11 and retaining ring 10 are imbedded in a workpiece 18 and a screw 19 has

**0113308**

attached some mechanism (not shown) to the workpiece 18. The nut 11 can be seen seated in retaining ring 10 which in turn has its serrated circumference 15 partially embedded in the workpiece 18. The displaced metal 20 is formed into a ring of metal by forcing the serrations 15 into the workpiece, displacing the softer metal into groove 16. The retaining ring metal lip 12 holds the nut from axial and lateral movement during pre-installation, installation and post-installation of the floating press nut assembly into the workpiece. The screw 19 may be attached to the nut 11 at any time and the aperture 13 prevents the nut 11 from rotating during installation of screw 19.

It can be seen from the foregoing that many variations or deviations can be made by those skilled in the art from the example cited but these are a violation of the spirit of the invention as described in the appended claims.

CLAIMS:

1. A floating press nut comprising a retaining ring (10) with a square aperture (13) in the top to accommodate a square nut means (11);

a metal retainer lip (12) bent inward after the nut (11) is installed in the aperture to keep said nut from axial and lateral movement;

a pilot flange (17) on the bottom of said retainer ring means; and

an annular groove (16) formed by the pilot flange (17) and the upper circumference of the retainer ring means , the annular groove (16) being adapted to receive therein a metal ring (20) composed of material trapped from the workpiece by the action of the retainer ring being depressed therein.

2. A floating press nut as described in claim 1 in which the retaining ring means has a serrated circumference (15).

3. A floating nut as described in claim 1 in which the nut means is a press nut.

4. A floating press nut comprising:

a retainer ring (10);

a square aperture (13) within the bore on top of said ring;

a square nut (11) to be accommodated by said aperture;

a metal retainer ring lip (12) bent inward after the nut is in the aperture to keep said nut from axial and lateral movement;

a pilot flange (17) on the bottom of said retainer ring; and

an annular groove (16) between the pilot flange and the upper serrated circumference (15) of the retainer ring, the annular groove (16) being formed to receive therein a ring (20) composed of metal swaged from the workpiece by the action of the retainer ring being depressed therein.

FIG.1

10
11
12
13
14

FIG.2

10
12
13
15
16
17
15

FIG. 3

FIG. 4

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-2 223 502   (AUDI NSU AUTO UNION) <br> * Figure 1 * | 1,4 | F 16 B   37/04 |
| Y | FR-A-2 145 162   (DEUTSCH FASTENER CORP.) <br> * Figures 2-5 * | 1,4 | |
| Y | GB-A-1 253 336   (SHUR-LOK CORP.) <br> * Figure 1 * | 1,4 | |
| Y | US-A-3 079 970   (BARRY) <br> * Figures 4, 6 * | 1,4 | |
| Y | US-A-3 279 303   (SHACKELFORD et al.) <br> * Figure 6 * | 1 | |
| A,Y | DE-A-1 803 967   (ROSAN et al.) <br> * Figure 1 * | 2,4 | TECHNICAL FIELDS SEARCHED (Int. Cl. ³) <br><br> F 16 B   37/04 |
| A,Y | DE-A-1 500 928   (ROSAN ENGINEERING CORP.) <br> * Figure 2 * | 2,4 | |

The present search report has been drawn up for all claims

| Place of search | Date of completion of the search | Examiner |
|---|---|---|
| BERLIN | 07-03-1984 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82